# EUROPEAN PATENT SPECIFICATION

(11) **EP 3 646 341 B1**
(45) Date of publication and mention of the grant of the patent: **25.01.2023**
(21) Application number: 17840602.1
(22) Date of filing: 30.06.2017
(51) Int. Cl.: G21C 19/307, G21C 15/18, B01D 29/15, B01D 29/52, B01D 21/02

(54) **VVER EMERGENCY COOLING SYSTEM SUMP PROTECTION DEVICE**
WWER-NOTKÜHLSYSTEMSAMMELBEHÄLTERSCHUTZVORRICHTUNG
DISPOSITIF DE PROTECTION DE PUISARD DE SYSTÈME DE REFROIDISSEMENT D'URGENCE DE VVER

(43) Date of publication of application: 06.05.2020
(73) Proprietor: Joint-Stock Company Scientific Research and Design Institute for Energy Technologies Atomproekt, St. Petersburg, 197183 (RU); Joint Stock Company "Science and Innovations", Moscow 119180 (RU)
(72) Inventor: BEZLEPKIN, Vladimir Viktorovich, Sankt-Petersburg 194223 (RU); KURCHEVSKY, Alexey Ivanovich, Sankt-Petersburg 196657 (RU); KUKHTEVICH, Vladimir Olegovich, Sankt-Petersburg 193312 (RU); MATYUSHEV, Leonid Aleksandrovich, Sankt-Petersburg 196657 (RU); MITRYUKHIN, Andrey Gennad'evich, Sankt-Petersburg 197343 (RU)
(74) Representative: Friese Goeden Patentanwälte PartGmbB
(86) International application number: PCT/RU2017/000471
(87) International publication number: WO 2019/004855

(56) References cited:
- WO-A1-01/39208
- WO-A1-2015/169751
- WO-A2-2014/189968
- CN-B- 101 947 397
- US-A1- 2001 022 287

## Description

The present invention pertains to the field of emergency protection systems of nuclear power plants. More particularly, the invention relates to Emergency Core Cooling System under loss-of-coolant accidents, namely, to sump protection device (SPD) in the emergency cooling system of a VVER, to the filter module and filter element of the sump protection device.

The main requirement for the emergency protection system in the process of design, analysis and operation of a nuclear reactor is that the protection system shall ensure safety in the event of a loss-of-coolant accident (maximum design-basis accident). Any unexpected loss of coolant flow through the reactor core can result in serious consequences for the nuclear power plant as a whole. Loss of flow may result from a failure of a reactor coolant pump or a valve or from a rupture of the main pipeline at the reactor pressure vessel inlet or outlet.

Accidents result in coolant leaks. This water may be carrying solid foreign particles resultant from destruction of thermal insulation of adjacent pipes or other reactor structures. Water with foreign particles will flow to the lowest part of the reactor building, into the pits (sumps). Power plants are equipped with safety systems that pump water back to various reactor cooling systems.

Emergency sumps under the reactor containment are designed for intake of primary coolant and chemically active solutions accumulated during loss-of-coolant accidents, after safety systems are switched to the mode of solution circulation within the containment.

Energy of rupture causes destruction of equipment within the containment and saturation of the coolant with debris.

Debris produced under the containment in a loss-of-coolant accident can be broken into several categories according to its properties:
latent debris;
debris resultant from destruction of thermal insulation structures;
debris resultant from destruction of anti-corrosive coatings;
chemical debris resultant from contact of coolant with equipment and structures within the containment.

Debris accumulated on filtration surfaces of the sumps shall not cause head losses leading to the reduction of cavitation margin of safety system pumps below permissible level, deaeration or surge of coolant boiling. Concentration of debris and its fractional breakdown shall not affect heat removal from the reactor plant and operability of equipment in the safety system recirculation loop during emergency and post-accident period. The design of the sump protection device shall not cause coolant funneling in any operation conditions.

Therefore, sumps are safety-related assemblies and shall be equipped with protective debris catches. Such devices are designed to clear the coolant from debris to the extent sufficient to ensure its sustained recirculation by safety system pumps until the reactor building and the reactor plant reach full cooldown. The catches shall have high structural strength and reliability in operation.

There are flat cloth filters available, which are installed in the bottom of a pit (sump), above the intake opening of the bleeding pipelines in the emergency reactor cooling system. Filters can be equipped with reinforcing elements or have stiffeners. (WO2015169752, 2015), (US2006075697, 2006). The main disadvantage of such devices is that they are installed at the bottom, and are not very efficient in the layer of debris accumulating after accidents due to frequent clogging. Filter flushing of the assemblies described above is time-consuming and requires considerable hydrodynamic forces due to unsteady flow across filter section.

There are filter modules for emergency cooling systems of nuclear reactors, designed from filter elements, which are concentric perforated tubes, with filter medium in between. (US20110215059, 2011), or hollow meshed tubes (US20120037559, 2012).

A high capacity suction strainer for an emergency core cooling system in a nuclear power plant is also disclosed (WO 2014/189968 A2, 2014) which coincides with this engineering solution in the maximum number of essential features and is accepted as a prototype. The prototype system comprises a flow-through plenum comprising an inlet and an outlet, a filter array comprising a plurality of a plurality of nested tubes, each comprising an inner perforated tube disposed within a corresponding outer perforated tube such that an interstitial space is created between the inner and outer perforated tubes, the inner and outer tubes comprising a radially extending slot adjacent to a radially extending segment of the inner and outer tubes wherein the radially extending slot and the radially extending segment extend in an identical radial direction relative to a center axis of the inner and outer tubes and a filter assembly external to the filter array located between the filter array and the inlet of the plenum.

Such devices are characterized by the above-mentioned drawbacks, as well as by the fact that due to the absence of flow distributors, the layer of debris is deposited unevenly over the filtration surface, which leads to the loss of its operational efficiency. Low efficiency of filters may result in loss of flow head, which reduces cavitation margin of safety systems pump below the permissible level, causes deaeration and boiling of the coolant. Filters installed in the intake openings of pipelines are forced to have small dimensions, which results in their ineffectiveness. Filter modules with flow distributors (US20080156712, 2008) provide flow distribution among filter modules, but the flow over the surface of the filter element is irregular, which may result in formation of an uneven debris layer and funneling in the coolant flow. This source is the closest to the proposed one.

As mentioned above, accidents involving rupture of nuclear reactor primary pipeline result in double-ended leakages of the coolant into the containment. This process is associated with a significant release of mass and energy into the containment in the form of superheated steam-air mixture.

As a result, the reactor gets dehydrated, and the core is heated up by core decay heat. At the same time, pressure and temperature under the containment grow. From the pipeline break the primary coolant enters the lower space of the containment. Release of mass and energy causes destruction of equipment and anti-corrosive coatings under the containment and filling of the coolant with debris.

The Emergency Core Cooling System, which includes a passive part, high-pressure and low-pressure emergency injection systems, is designed to protect the reactor from overheating and core meltdown. Pressure is reduced and heat is removed from the containment by the sprinkler system. Boron solution reserve is used for operation of all systems at the first stage of an accident. In this mode, the coolant from the tank enters the reactor and then through the pipeline break is released into the lower containment space. As soon as the tank empties, all systems are switched to recirculation of the accumulated coolant.

From that moment on, the coolant containing a significant amount of debris (which may lead to failures of circulation loop elements and loss of protection functions of the systems) starts to be supplied to the circulation loop of nuclear reactor emergency core cooling system (ECCS).

The purpose of the invention is to provide coolant purification and to maintain its sustained circulation by protecting the sump from debris accumulation.

The technical result of the claimed solution lies in ensuring steady flow onto the filtration surface and preventing uneven accumulation of debris, as well as providing uniform flow over the surface of the filter element.

WO 2014/189968 A2 discloses a sump protection device according to the preamble of claim 1. The object of the invention is achieved by a sump protection device with the features of claim 1. Preferred embodiments of the invention are disclosed in the dependent claims. In the preferable embodiment, the filter element pipes are perforated with helical slots.

The filter element pipes are preferably made of wire with slots between turns.

In the preferable embodiment, the wire shall have triangular profile.

The wire cross-section shall not exceed 1.0x2.0 mm,
with slot size not more than 1 mm.

Preferably, the diameter of holes in the perforated distribution tube at its end down the flow shall not exceed half the diameter of holes at the beginning of the tube.

Such design of the device allows to remove debris from the coolant and to maintain its sustained recirculation by safety system pumps until full cooldown of the containment and the reactor plant.

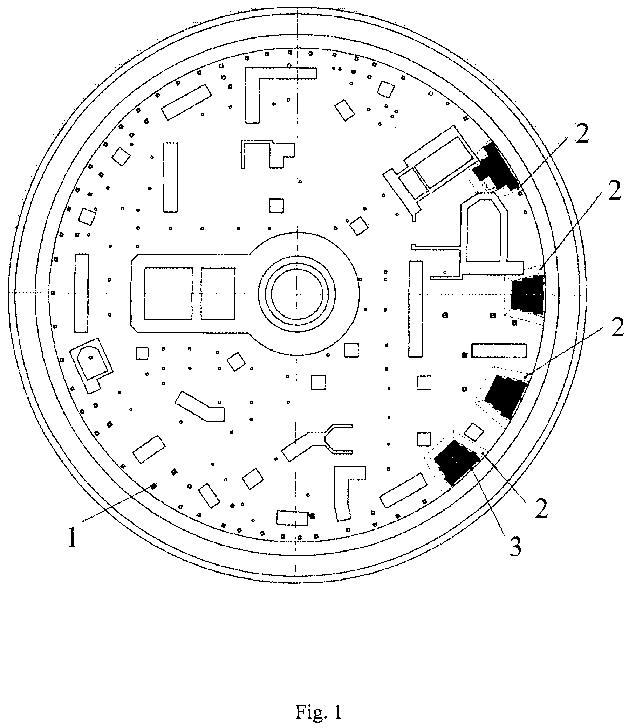

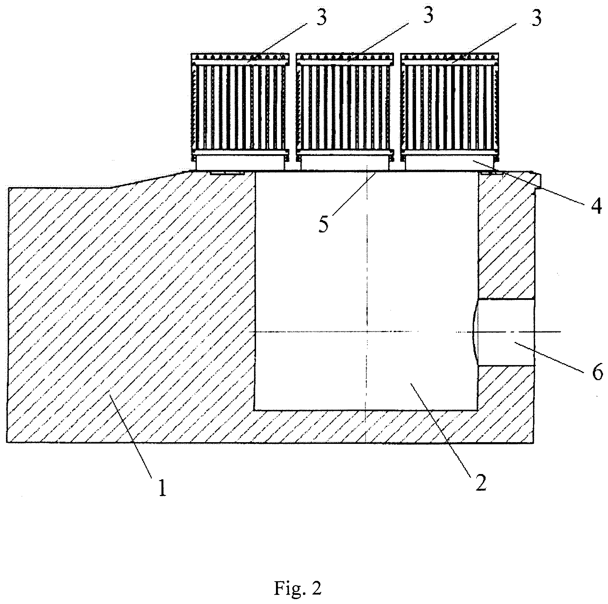

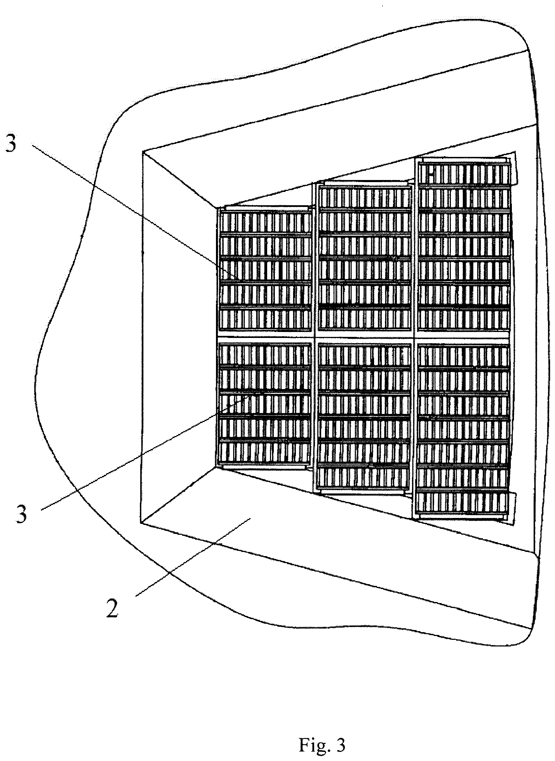

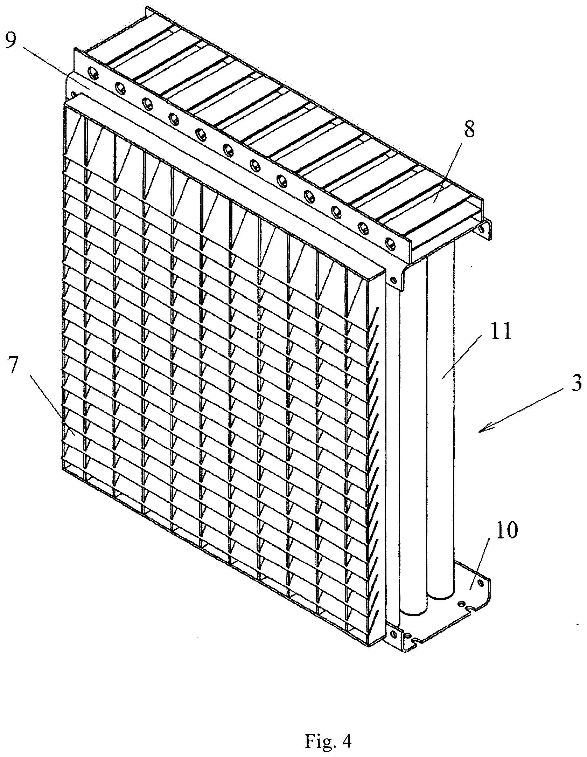

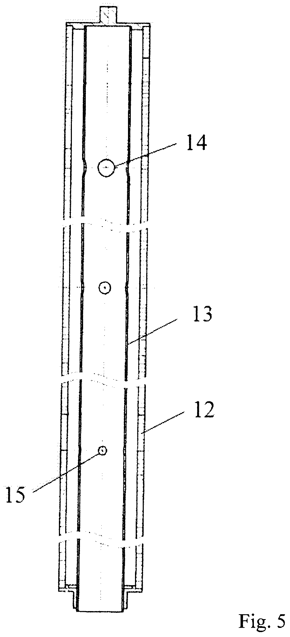

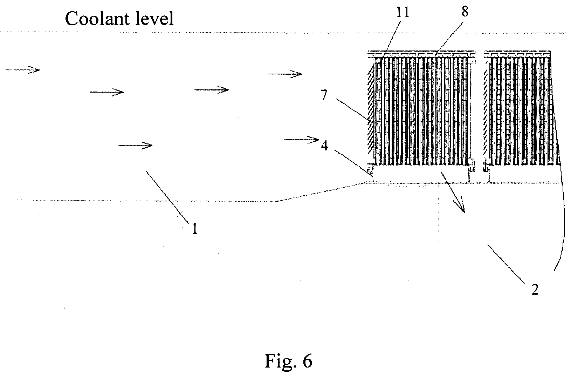

The claimed device is shown in the drawings, where Fig.1 is a general view of the bottom part of the reactor containment including sump openings and filter modules installed above them; Fig. 2 is a layout of filter modules installed above the sump intake; Fig. 3 is a top view of the sump port; in Fig. 4 is a general view of the filter module; Fig. 5 shows the filter element, Fig. 6 shows flow circulation scheme through the filter module.

As shown in the figures, at the bottom of the nuclear reactor containment (1) there are sumps (2), which are topped with filter modules (3) connected to the intake (6) of reactor emergency cooling system pipelines with the help of headers (4) via the intake (5) of the sump (2). The filter module (3) comprises a lateral slotted grate (7), top slotted grate (8) interconnected via top and bottom panels (9) and (10) (respectively) with the filter elements fixed in between. The filter elements are designed as filtration pipes (11) with distribution tubes (13) (located inside them) with holes (14) and (15) which get successively reduced in size down the flow.

The device operates in the following manner:
The reactor containment bottom (1) is of considerable size, which results in minimum coolant flow rate and creates a possibility for debris to settle along the coolant way to the sumps (2). The threshold velocity of debris that has reached the floor exceeds the settling velocity of debris in the flow. The filter modules (3) are placed at certain height from the bottom level. This provides for additional retention of debris that has reached the floor. Before entry into the sumps (2) and then into the intake (6) of the reactor emergency cooling system pipelines the coolant with debris passes through the filter modules (3) installed on top of the sumps (2) and connected with the sump (2) intake opening (5) by means of headers (4). Next, the coolant enters the filter module (3) through the lateral slotted grate (7) and top slotted grate (8). The outer surface of the slotted grates (7) and (8) has holes with clear dimensions of 17x170 mm, which provides entrapment of particles larger than 17 mm. The internal part of the slotted grates (7) and (8) forms inclined channels of rectangular shape and provides for deposition of particles with settling velocity over 0.017 m/s characteristic size of more than 200 µm for particles and fibers of class 4 and higher. The filter elements are designed as filtration pipes (11) with openings (12). Openings (12) of the filter elements are rectangular helical slots, the length of which significantly exceeds their width. The slot width is 1 mm based on the minimum permissible particle size in the circulation system. The slotted shape of openings compared to the square one of the grid or perforated plate, reduces the risk of its clogging with particles smaller than the slot size when they simultaneously approach the slot. Via filtration pipes with openings (12), the flow enters distribution tubes (13) (inside the pipes) with openings (14) and (15), which get reduced in size down the flow. The surface area of the filter elements is much larger than the area of the intake (6), which results in a substantially irregular flow of the coolant through the filter surface. To prevent this, distribution tubes (13) are installed inside the filter elements, they connect the internal cavity of the filter element to the intake opening (6). The distribution tubes (13) have holes (14) and (15) of different diameters distributed throughout the length, which ensures uniform flow distribution over the filtering surface. The flow of coolant free from debris is discharged through the intake (6) to the pipeline of the reactor emergency cooling system.

## Claims

1. VVER emergency cooling system sump protection device comprising a system of header-connected filter modules (3) comprising filter elements (11), each filter module (3) having slotted grates (8) on top, the filter elements are arranged inside and designed as laterally slotted filtration pipes (11), and perforated distribution tubes (13) arranged inside the filtration pipes (11), the internals of the perforated distribution tubes (13) are connected to headers (4),
**characterized in that**
the filtration pipes (11) are made of wire with slots between turns, and
each filter module (3) has slotted grates (7) on sides.

2. Sump protection device as defined in claim 1, wherein the filtration pipes (11) are perforated with helical slots.

3. Sump protection device as defined in any of the preceding claims, wherein the perforated distribution tubes (13) comprise openings (14, 15), which get reduced in size down the flow.

4. Sump protection device as defined in any of the preceding claims, wherein the wire has a triangular profile.

5. Sump protection device as defined in claim 3, wherein the wire profile cross-section does not exceed 1.0x2.0 mm.

6. Sump protection device as defined in any of the preceding claims, wherein the slot size does not exceed 1 mm.

## Patentansprüche

1. Sumpfschutzvorrichtung für ein WWER-Notkühlsystem mit einem System von durch einen Sammler verbundenen Filtermodulen (3) mit Filterelementen (11), wobei jedes Filtermodul (3) oberseitig geschlitzte Gitterplatten (8) aufweist, die Filterelemente innenliegend angeordnet und als seitlich geschlitzte Filtrationsrohre (11) ausgebildet sind, und innerhalb der Filtrationsrohre (11) perforierte Verteilerrohre (13) angeordnet sind, die Einbauten der perforierten Verteilerrohre (13) mit Sammlern (4) verbunden sind,
**dadurch gekennzeichnet,**
**dass** die Filtrationsrohre (11) aus Draht mit Schlitzen zwischen Windungen bestehen und
jedes Filtermodul (3) seitlich geschlitzte Gitterplatten (7) aufweist.

2. Sumpfschutzvorrichtung nach Anspruch 1, **dadurch gekennzeichnet, dass** die Filtrationsrohre (11) mit wendelförmigen Schlitzen perforiert sind.

3. Sumpfschutzvorrichtung nach einem der vorhergehenden Ansprüche, **dadurch gekennzeichnet, dass** die perforierten Verteilerrohre (13) Öffnungen (14, 15) aufweisen, die entlang der Strömung verkleinert werden.

4. Sumpfschutzvorrichtung nach einem der vorhergehenden Ansprüche, **dadurch gekennzeichnet, dass** der Draht ein dreieckiges Profil aufweist.

5. Sumpfschutzvorrichtung nach Anspruch 3, **dadurch gekennzeichnet, dass** der Drahtprofilquerschnitt 1.0 x 2.0 mm nicht überschreitet.

6. Sumpfschutzvorrichtung nach einem der vorhergehenden Ansprüche, **dadurch gekennzeichnet, dass** die Schlitzgröße 1 mm nicht überschreitet.

## Revendications

1. Le dispositif de protection des fosses dans le système de refroidissement de sécurité du réacteur à eau pressurisée qui contient un système de modules de filtration (3) qui comportent les éléments de filtration (11) et sont réunis par les collecteurs, chaque module de filtration (3) a les grilles à fentes (8) au-dessus, les éléments de filtration sont placés à l'intérieur et réalisés en forme de tubes de filtration (11) avec les fentes latérales, et les tubes de distribution perforés (13) sont placés à l'intérieur des tubes de filtration (11), les parties intérieures des tubes de distribution perforés (13) sont réunis avec les collecteurs (4),
**qui se distingue par ce que**
les tubes de filtration (11) sont faits en fil avec les fentes entre les enroulements, et les grilles à fentes (7) se trouvent de côté de chaque module de filtration (3).

2. Le dispositif de protection des fosses selon le p. 1 qui se distingue par ce que les tubes de filtration (11) sont réalisés avec perforation en forme de fentes spirales.

3. Le dispositif de protection des fosses selon tout point précédent qui se distingue par ce que les tubes de distribution perforés (13) ont les ouvertures (14, 15) dont les dimensions se diminuent vers le bas du flux.

4. Le dispositif de protection des fosses selon tout point précédent qui se distingue par ce que le profil du fil est triangulaire.

5. Le dispositif de protection des fosses selon le p. 3 qui se distingue par ce que la coupe du profil du fil ne dépasse pas 1,0x2,0 mm.

6. Le dispositif de protection des fosses selon tout point précédent qui se distingue par ce que les dimensions des fentes ne dépassent pas 1 mm.
